# FASCICULE DE BREVET EUROPEEN

(11) **EP 1 835 830 B1**
(45) Date de publication et mention de la délivrance du brevet: **14.04.2010**
(21) Numéro de dépôt: 05850615.5
(22) Date de dépôt: 26.12.2005
(51) Int. Cl.: A47J 43/07, A47J 43/08

(54) **APPAREIL ELECTROMENAGER DE PREPARATION CULINAIRE COMPORTANT UN MECANISME DE TRANSMISSION MUNI DE MOYENS DE FREINAGE**
ELEKTRISCHES HAUSHALTSGERÄT ZUR NAHRUNGSZUBEREITUNG MIT EINEM GETRIEBEMECHANISMUS MIT BREMSELEMENTEN
ELECTRICAL HOUSEHOLD APPLIANCE FOR CULINARY PREPARATION, COMPRISING A TRANSMISSION MECHANISM PROVIDED WITH BRAKING MEANS

(30) Priorité: 10.01.2005 FR 0500211
(43) Date de publication de la demande: 26.09.2007
(73) Titulaire: SEB S.A., 69130 Ecully (FR)
(72) Inventeur: MARTIN, Philippe, F-53940 Le Genest Saint Isle (FR)
(74) Mandataire: Kiehl, Hubert
(86) Numéro de dépôt international: PCT/FR2005/003279
(87) Numéro de publication internationale: WO 2006/075067

(56) Documents cités:
- US-A- 4 285 473
- US-A- 5 353 697

## Description

La présente invention concerne le domaine technique général des appareils électroménagers de préparation culinaire tels que les robots ménager multifonctions, les petits robots hacheur, les pieds mixer ou les batteurs. La présente invention est relative à un appareil électroménager comportant un boîtier comprenant un moteur pour l'entraînement d'un outil rotatif dans un récipient de travail et se rapporte plus particulièrement à des moyens de freinage de l'outil rotatif.

Il est connu d'équiper les appareils électroménagers de préparation culinaire d'un système de freinage permettant de limiter le temps pendant lequel l'outil de travail continue de tourner du fait de son inertie lorsque le moteur n'est plus alimenté électriquement. Un tel système de freinage présente l'avantage de limiter les risques de blessures lorsque l'utilisateur ouvre le couvercle du récipient de travail juste après avoir relâché le bouton de commande du moteur.

Ainsi, le document EP 013 805 divulgue un robot ménager comportant un dispositif de sécurité destiné à freiner la rotation de l'arbre entraînant l'outil de travail. Dans ce document, le dispositif de sécurité est constitué par un tampon de freinage réalisé dans un matériau de frottement qui est maintenu, sous la poussée d'un ressort, contre l'arbre d'entraînement de l'outil de manière à freiner l'outil par les efforts de frottements. Un tel tampon de freinage présente cependant l'inconvénient de s'échauffer et de s'user rapidement sous les efforts de frottements et doit donc être changé régulièrement pour obtenir un fonctionnement optimal du dispositif de freinage.

Le document US 4285473A divulgue également un robot ménager similaire à celui de l'invention.

L'invention qui suit vise à pallier ces inconvénients en proposant un appareil électroménager comportant un outil rotatif muni de moyens de freinage procurant des efforts de freinage régulier dans le temps, sans usure importante des pièces mises en jeux.

Un autre but de la présente invention est de proposer un appareil électroménager muni de moyens de freinage améliorant la douceur et le silence de fonctionnement de l'appareil, notamment lorsque le dispositif d'entraînement de l'outil rotatif comporte des engrenages.

Le but de l'invention est atteint par un appareil électroménager de préparation culinaire comportant un boîtier comprenant un moteur pour l'entraînement d'un outil rotatif dans un récipient de travail, le moteur étant relié à un arbre d'entraînement de l'outil rotatif par un mécanisme de transmission muni de moyens de freinage, **caractérisé en ce que** les moyens de freinage comportent un élément compressible en matériau élastique qui vient rouler, en se comprimant, sur une bande de roulement, l'élément compressible ou la bande de roulement étant solidaire en rotation d'un arbre du mécanisme de transmission.

Une telle caractéristique présente l'avantage de permettre le freinage de l'outil rotatif par la dissipation de l'énergie cinétique de l'outil dans les efforts nécessaires à la compression du matériau élastique. Un tel dispositif de freinage présente l'avantage d'être endurant et fiable, l'élément compressible étant peu sujet à l'usure par frottement puisqu'il roule sur la bande de roulement.

Selon une autre caractéristique de l'invention, l'élément compressible est solidaire en rotation d'un premier arbre du mécanisme de transmission et la bande de roulement est portée par une roue solidaire en rotation d'un deuxième arbre du mécanisme de transmission.

Selon une autre caractéristique de l'invention, l'élément compressible est un anneau élastique solidaire de l'arbre de sortie du moteur, l'anneau élastique venant en appui contre la bande de roulement de la roue solidaire de l'arbre d'entraînement de l'outil rotatif et étant comprimé par la roue.

Selon une autre caractéristique de l'invention, l'arbre de sortie du moteur est muni d'un pignon coopérant avec une couronne solidaire en rotation de l'arbre d'entraînement de l'outil.

Selon une autre caractéristique de l'invention, l'anneau élastique est accolé au pignon et la bande de roulement de la roue est juxtaposée à la couronne, la bande de roulement de la roue et la couronne appartenant à une même pièce intégrant également l'arbre d'entraînement de l'outil rotatif.

Une telle caractéristique présente l'avantage d'une grande simplicité de construction et assure une grande douceur de fonctionnement des engrenages du mécanisme de transmission, la pression permanente exercée par l'anneau élastique sur la roue diminuant les chocs entre les dents et donc le bruit généré par le mécanisme de transmission.

Selon encore une autre caractéristique de l'invention, la bande de roulement de la roue présente une surface lisse.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un robot équipé de moyens de freinage de l'outil rotatif selon un mode particulier de réalisation de l'invention ;
- la figure 2 est une vue du moteur et du dispositif d'entraînement de l'outil disposés à l'intérieur du boîtier du robot de la figure 1;
- la figure 3 est une vue en perspective éclatée du mécanisme de transmission de l'outil et des moyens de freinage illustrés à la figure 2 représentés isolément.

Seuls les éléments nécessaires à la compréhension de l'invention ont été représentés. Pour faciliter la lecture des dessins les mêmes éléments portent les mêmes références d'une figure à l'autre.

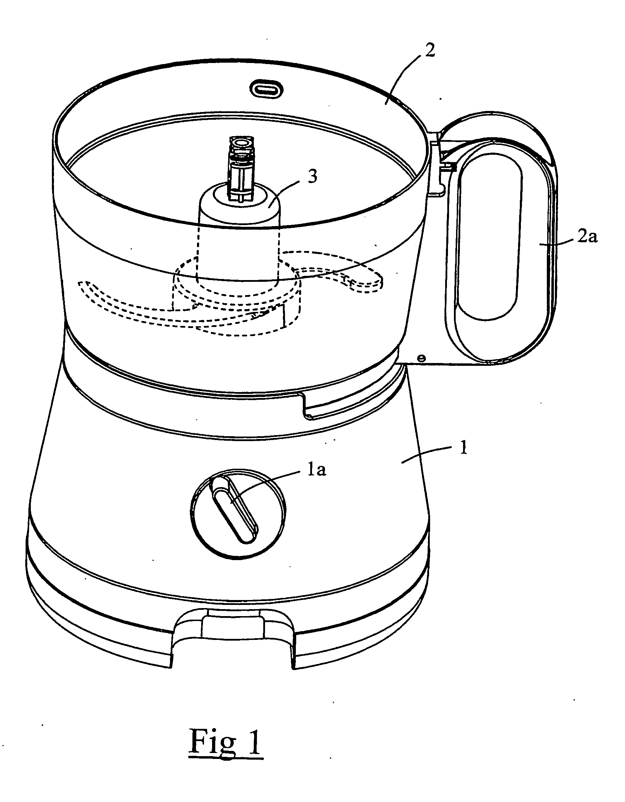

Le robot ménager ou appareil électroménager de préparation culinaire illustré à la figure 1 comprend un boîtier 1 supportant un récipient 2, en forme de bol, au fond duquel est disposé un outil de travail rotatif 3. Le récipient 2 comporte une poignée 2a et est fermé classiquement par un couvercle, non représenté sur les figures.

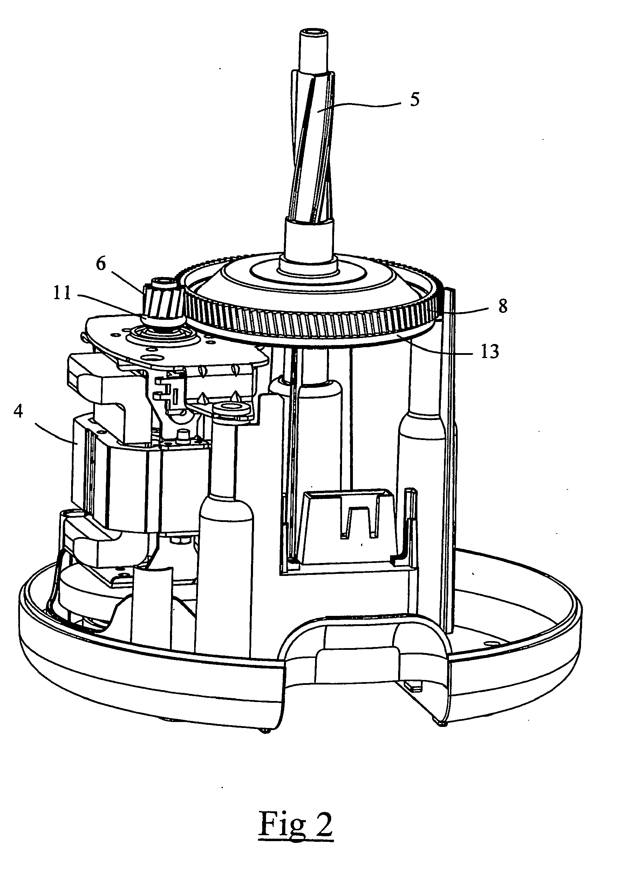

Le boîtier 1 renferme un moteur 4, visible sur la figure 2, dont le fonctionnement est commandé par un bouton 1 a disposé sur la face avant du boîtier 1. Le moteur entraîne, par l'intermédiaire d'un mécanisme de transmission, un arbre d'entraînement 5 de l'outil rotatif 3; l'arbre d'entraînement 5 s'engageant classiquement dans une cheminée disposée au fond du récipient 2, non visible sur les figures.

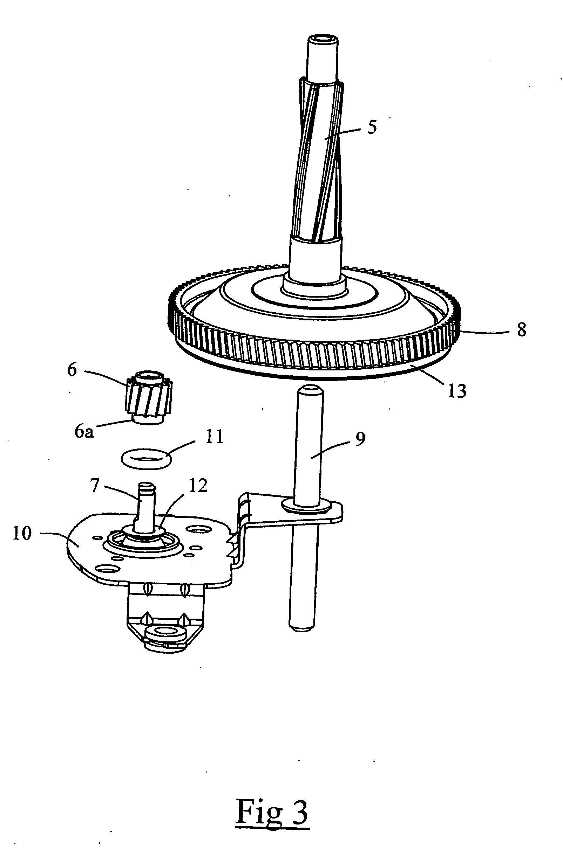

Conformément aux figures 2 et 3, le mécanisme de transmission comporte un pignon 6 à denture hélicoïdale solidaire de l'arbre de sortie 7 du moteur 4, les dents du pignon 6 s'engageant dans les dents d'une couronne 8 solidaire de l'arbre d'entraînement 5 de l'outil rotatif. Le pignon 6 présente un diamètre primitif de l'ordre de 9 mm et la couronne 8 présente un diamètre de l'ordre de 90 mm de sorte que la vitesse de rotation de l'arbre d'entraînement 5 est fortement réduite par rapport à la vitesse de rotation de l'arbre de sortie 7 du moteur 4. Avantageusement, l'arbre d'entraînement 5 et la couronne 8 sont portés par une même pièce obtenue par moulage, cette pièce étant guidée en rotation par un axe 9 porté par une platine 10.

Plus particulièrement selon l'invention, le mécanisme de transmission est muni de moyens de freinage constitués par un anneau 11 en caoutchouc, semblable à un joint torique, solidaire en rotation du pignon 6, l'anneau 11 s'engageant autour d'une portion cylindrique 6a portée par le pignon 6 et se trouvant immobilisé latéralement entre une rondelle 12 portée par l'arbre de sortie 7 du moteur 4 et les dents du pignon 6. L'anneau 11 est avantageusement monté serré sur la portion cylindrique 6a du pignon 6 et est légèrement comprimé au montage entre les dents du pignon 6 et la rondelle 12 de manière à être parfaitement immobilisé sur le pignon 6.

La périphérie de l'anneau 11 vient en appui contre la bande de roulement de la surfasse lisse d'une roue 13 disposée latéralement aux dents de la couronne 8 et solidaire en rotation de cette dernière, l'anneau 11 étant comprimé contre la roue 13.

A titre d'exemple, la section de l'anneau 11 est de l'ordre de 3 mm et l'anneau 11 est comprimé en permanence par la roue sur une épaisseur de l'ordre de 1 mm. L'anneau sera avantageusement réalisé en caoutchouc ou en silicone de dureté de l'ordre de 70 shores ou bien encore en Santoprène.

Une telle caractéristique permet d'obtenir un anneau 11 qui roule sur la bande de roulement 13 lors de la rotation du pignon 6 sur la couronne 8 et qui agit en permanence en pression sur la roue 13 associée de sorte que l'énergie nécessaire à la compression de l'anneau 11 freine le mécanisme de transmission et assure le ralentissement rapide de l'outil rotatif lorsque l'alimentation du moteur est coupée.

Un tel dispositif de freinage utilisant un élément compressible pour générer un effort de freinage présente l'avantage de posséder une grande endurance dans le temps, l'anneau étant peu sujet à l'usure étant donné qu'il route sans glissement sur la bande de roulement de la roue.

L'utilisation d'un tel dispositif de freinage présente également l'énorme avantage de diminuer les bruits de fonctionnement de l'appareil en absorbant les chocs de dent sur dent lors de la transmission de mouvement.

Bien entendu, l'épaisseur de compression de l'élément compressible sera fonction de la nature du matériau utilisé et de la pression que l'on souhaite exercer sur le mécanisme de transmission et pourra ainsi varier d'une épaisseur quasiment nulle, par exemple de l'ordre de quelques centièmes de millimètre, à plusieurs millimètres.

Enfin, l'invention est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans des variantes de réalisation, l'anneau élastique pourra être remplacé par un élément compressible présentant une forme différente ou pourra également être remplacé par un bandage surmoulé. ,

Ainsi, dans une variante de réalisation, l'anneau élastique pourra être solidaire de la couronne et rouler sur une roue solidaire du pignon.

Ainsi, l'invention pourra être appliquée à tous types de préparateurs culinaires comprenant un moteur entraînant un outil rotatif tels que les mini-hachoirs, les mixeurs, les batteurs...

## Revendications

1. Appareil électroménager de préparation culinaire comportant un boîtier (1) comprenant un moteur (4) pour l'entraînement d'un outil rotatif (3) dans un récipient de travail (2), ledit moteur (4) étant relié à un arbre d'entraînement (5) de l'outil rotatif (3) par un mécanisme de transmission muni de moyens de freinage, **caractérisé en ce que** lesdits moyens de freinage comportent un élément compressible (11) en matériau élastique qui vient rouler, en se comprimant, sur une bande de roulement, ledit élément compressible (11) ou ladite bande de roulement étant solidaire en rotation d'un arbre du mécanisme de transmission.

2. Appareil électroménager selon la revendication 1, **caractérisé en ce que** l'élément compressible (11) est solidaire en rotation d'un premier arbre (7) du mécanisme de transmission et la bande de roulement est portée par une roue (13) solidaire en rotation d'un deuxième arbre (5) du mécanisme de transmission.

3. Appareil électroménager selon l'une quelconque des revendications 1 à 2, **caractérisé en ce que** ledit élément compressible est un anneau élastique (11) solidaire de l'arbre de sortie (7) du moteur (4), l'anneau élastique (11) venant en appui contre la bande de roulement de la roue (13) solidaire de l'arbre d'entraînement (5) de l'outil rotatif et étant comprimé par la roue (13).

4. Appareil électroménager selon la revendication 3, **caractérisé en ce que** l'arbre de sortie (7) du moteur (4) est muni d'un pignon (6) coopérant avec une couronne (8) solidaire en rotation de l'arbre d'entraînement (5) de l'outil.

5. Appareil selon la revendication 4, **caractérisé en ce que** l'anneau élastique (11) est accolé au pignon (6) et la bande de roulement de la roue (13) est juxtaposée à la couronne (8), la bande de roulement de la roue (13) et la couronne (8) appartenant à une même pièce intégrant également l'arbre d'entraînement (5) de l'outil rotatif.

6. Appareil selon l'une quelconque des revendications 1 à 5, **caractérisé en ce que** la bande de roulement de la roue (13) présente une surface lisse.

## Claims

1. Electrical household food-preparation appliance comprising a housing (1) containing a motor (4) to drive a rotating tool (3) in a working container (2), said motor (4) being connected to a drive shaft (5) of the rotating tool (3) by a transmission mechanism equipped with braking means, **characterised in that** said braking means comprise a compressible component (11) made from a flexible material that runs, while being compressed, on a roll band, said compressible component (11) or said roll band being rotatably integral with a shaft of the transmission mechanism.

2. Electrical household appliance according to claim 1, **characterised in that** the compressible component (11) is rotatably integral with a first shaft (7) of the transmission mechanism and the roll band is held by a wheel (13) rotatably integral with a second shaft (5) of the transmission mechanism.

3. Electrical household appliance according to any one of claims 1 to 2, **characterised in that** said compressible component is a flexible ring (11) integral with the output shaft (7) of the motor (4), the flexible ring (11) resting against the roll band of the wheel (13) integral with the drive shaft (5) of the rotating tool and being compressed by the wheel (13).

4. Electrical household appliance according to claim 3, **characterised in that** the output shaft (7) of the motor (4) is equipped with a pinion (6) cooperating with a ring gear (8) rotatably integral with the drive shaft (5) of the tool.

5. Appliance according to claim 4, **characterised in that** the flexible ring (11) is adjacent to the pinion (6) and the roll band of the wheel (13) is juxtaposed to the ring gear (8), the roll band of the wheel (13) and the ring gear (8) belonging to a single part that also incorporates the drive shaft (5) of the rotating tool.

6. Appliance according to any one of claims 1 to 5, **characterised in that** the roll band of the wheel (13) has a smooth surface.

## Patentansprüche

1. Elektrohaushaltsgerät für kulinarische Zubereitungen, umfassend ein Gehäuse (1) mit einem Motor (4) für den Antrieb eines Drehwerkzeugs (3) in einem Arbeitsbehälter (2), wobei der Motor (4) über einen Übertragungsmechanismus, der mit Bremsmitteln ausgestattet ist, mit einer Antriebswelle (5) des Drehwerkzeugs (3) verbunden ist, **dadurch gekennzeichnet, dass** die Bremsmittel ein komprimierbares Element (11) aus elastischem Material umfassen, das bei gleichzeitiger Komprimierung auf einer Laufbahn läuft, wobei das komprimierbare Element (11) oder die Laufbahn mit einer Welle des Übertragungsmechanismus drehfest verbunden sind.

2. Elektrohaushaltsgerät nach Anspruch 1, **dadurch gekennzeichnet, dass** das komprimierbare Element (11) mit einer erste Welle (7) des Übertragungsmechanismus drehfest verbunden ist und die Laufbahn von einem Rad (13) getragen wird, das mit einer zweiten Welle (5) des Übertragungsmechanismus drehfest verbunden ist.

3. Elektrohaushaltsgerät nach einem der Ansprüche 1 bis 2, **dadurch gekennzeichnet, dass** das komprimierbare Element ein elastischer Ring (11) ist, der mit der Ausgangswelle (7) des Motors (4) fest verbunden ist, wobei der elastische Ring (11) gegen die Laufbahn des Rads (13) drückt, das mit der Antriebswelle (5) des Drehwerkzeugs fest verbunden ist, und vom Rad (13) komprimiert wird.

4. Elektrohaushaltsgerät nach Anspruch 3, **dadurch gekennzeichnet, dass** die Ausgangswelle (7) des Motors (4) mit einem Ritzel (6) ausgestattet ist, das mit einem Kranz (8) zusammenwirkt, der mit der Antriebswelle (5) des Werkzeugs drehfest verbunden ist.

5. Gerät nach Anspruch 4, **dadurch gekennzeichnet, dass** der elastische Ring (11) an das Ritzel (6) angefügt ist und die Laufbahn des Rads (13) an den Kranz (8) angereiht ist, wobei die Laufbahn des Rads (13) und der Kranz (8) einem gleichen Teil angehören, der ebenfalls die Antriebswelle (5) des Drehwerkzeugs umfasst.

6. Gerät nach einem der Ansprüche 1 bis 5, **dadurch gekennzeichnet, dass** die Laufbahn des Rads (13) eine glatte Oberfläche aufweist.
